# EUROPÄISCHE PATENTSCHRIFT

(11) **EP 1 171 399 B1**
(45) Veröffentlichungstag und Bekanntmachung des Hinweises auf die Patenterteilung: **28.04.2004**
(21) Anmeldenummer: 01902323.3
(22) Anmeldetag: 16.01.2001
(51) Int. Cl.: C04B 14/02, C09C 3/00

(54) **PIGMENTGRANULAT ZUR EINFÄRBUNG VON BAUSTOFFEN UND VERFAHREN ZU DESSEN HERSTELLUNG**
PIGMENT GRANULES FOR COLOURING BUILDING MATERIALS AND A METHOD FOR PRODUCING SAME
GRANULAT PIGMENTAIRE POUR LA COLORATION DE MATERIAUX DE CONSTRUCTION ET SON PROCEDE DE FABRICATION

(30) Priorität: 21.01.2000 DE 10002559
(43) Veröffentlichungstag der Anmeldung: 16.01.2002
(73) Patentinhaber: Brockhues GmbH & Co. KG, 65396 Walluf (DE)
(72) Erfinder: EGGER, Christian, I-10040 Pralormo (IT); NUNGESS, Klaus, 63263 Neu-Isenburg (DE); VEIT, Adolf, 65187 Wiesbaden (DE); VOGLER, Stefan, 65396 Walluf (DE)
(74) Vertreter: Maiwald Patentanwalts GmbH
(86) Internationale Anmeldenummer: PCT/EP2001/000432
(87) Internationale Veröffentlichungsnummer: WO 2001/053228

(56) Entgegenhaltungen:
- DE-A- 19 826 624
- GB-A- 2 065 692
- US-A- 5 882 395
- US-A- 5 961 710

## Beschreibung

Die Erfindung betrifft Pigmentgranulate zur Einfärbung von Baustoffen und Verfahren zur Herstellung solcher Granulate.

Zur Einfärbung von Baustoffen, insbesondere von zementgebundenen Baustoffen wie zum Beispiel Beton, werden gegenwärtig überwiegend anorganische Pigmente, insbesondere auf der Basis verschiedener Eisenoxide eingesetzt. Pigmentgranulate zeigen dabei gegenüber Pulvern und Pasten sehr erhebliche Vorteile, z.B. bei der Handhabung, bei der Vermeidung von Staub und dergleichen, aber auch hinsichtlich ihrer Dispergiereigenschaften.

Aus der DE-A1 29 08 202 ist es bekannt, wasserhaltige Kohlenstoffpräparate (mit 30 % bis 80 % Wasser) als Perlgranulate zum Färben in der Zementindustrie einzusetzen. Diese Technik ist für andere Pigmente nicht verwendbar, und Granulate mit solchen Wassergehalten sind grundsätzlich nachteilig, auch für Einsatzzwecke im Baustoffbereich.

Aus der DE-A1 29 40 156 ist es bekannt, Pigmente zusammen mit Bindemitteln durch Sprühgranulation zu granulieren. Die so erzeugten Pigmentgranulate finden Einsatz für die Herstellung von Farbtinten, die Färbung von Kunststoffen, Lacken und dergleichen. Ein Bezug zur Einfärbung von Baustoffen, Asphalt und dergleichen besteht nicht.

Aus der EP-A2 0 191 278 sind Farbgranulate mit über 5 Gew.-% bis zu 50 Gew.-% Wasser bekannt. Gemäß dieser technischen Lehre sind Granulate mit geringeren Wassergehalten für Baustoffe nicht brauchbar.

In der DE-A1 36 19 363 sind zum erstenmal für die Färbung von Baustoffen brauchbare Pigmentgranulate beschrieben worden, die andere Pigmente als Kohlenstoff umfassen können. Nach diesem Stand der Technik werden Mikrogranulate aus solchen Pigmenten durch Vermischung mit Bindemitteln und nachfolgende Sprühtrocknung erzeugt. Bei den Bindemitteln handelt es sich im wesentlichen um organische Bindemittel, wie zum Beispiel Ligninsulfonat. Diese Granulate haben kommerziellen Erfolg.

In der DE-A1 39 18 694 sind Mikrogranulate ohne organische Bindemittel vorgeschlagen worden. Hier werden als Bindemittel anorganische Verbindungen, insbesondere Oxide und/oder Hydroxide und entsprechende Hydrate verwendet. Solche Produkte sind in der Praxis oft problematisch, weil sie zu unvollständiger Dispergierung beim Einarbeiten in Beton und dergleichen neigen.

Die EP-A1 0 567 882 beschreibt Aufbau-, Kompaktierungs- und Sprühgranulate mit Bindemitteln wie insbesondere Maschinenöl, Wachs, Paraffin und dergleichen, die zum Färben von Asphalt dienen sollen. Zusätzlich zu den Bindemitteln sollen Stoffe wie Ligninsulfonat, Melasse, Stärke und dergleichen eingesetzt werden können. Stoffe wie Ligninsulfonat lassen sich gemäß dieser Offenbarung alleine als Bindemittel nicht verwenden.

Aus der EP-A1 0 650 939 ist es bekannt, Eisenoxidpigmente mit Bindemitteln unter sehr geringen Preßdrücken zu kompaktieren, wobei Linienkräfte von 15 kN/cm nicht überschritten und Dichten zwischen 0,5 g/cm³ und 3 g/cm³ eingestellt werden sollen. Diese leicht kompaktierten Pulverprodukte werden dann zu Keimen und Pulver geschrotet, und es schließt sich eine Aufbaugranulierung herkömmlicher Art an. Der Kompaktierungsschritt scheint auf die Eigenschaften des Granulats keinen nachweisbaren Einfluß zu haben; es handelt sich grundsätzlich um eine herkömmliche Aufbaugranulierung. Als Bindemittel werden anorganische oder organische Stoffe, hauptsächlich Öle und dergleichen eingesetzt.

Aus der EP-A1 0 657 511 ist es bekannt, Pigmentgranulate mit Lactose als Bindemittel durch Sprühtrocknung bei Restfeuchten unterhalb von 2,5 Gew.-% herzustellen.

Unter "Granulaten" wird im Kontext dieser Beschreibung jedes Material verstanden, dessen mittlere Korngröße im Vergleich mit den Ausgangsmaterialien durch einen Behandlungsschritt vergrößert worden ist. "Granulate" umfassen daher nicht nur Sprühgranulate und Kompaktierungsgranulate, sondern auch z.B. Produkte einer Feuchtbehandlung mit anschließender Zerkleinerung.

Wegen der erheblichen Vorteile, im Vergleich mit Pulvern, Pasten und dergleichen, werden Granulate seit Jahrzehnten industriell in größtem Umfang verwendet. Auch für die Verarbeitung von Pigmenten ist die Granulierung seit langem durchgesetzt.

Nun lassen sich Erfahrungen, die mit Pigmentgranulaten in anderen Gebieten gemacht werden, auf das Färben von Baustoffen, Asphalt und dergleichen nicht einfach übertragen. In der Praxis erweisen sich Granulate, die theoretisch fast perfekt geeignet sein sollten, oft als unzureichend, weil sie nicht alle erforderlichen Eigenschaften miteinander kombinieren.

So wird zwar oft eine gute Festigkeit des Granulates erreicht, was dessen Zerstörung bei Verpackung und Transport entgegenwirkt und die Staubbildung zurückhält; dadurch kann aber auf der anderen Seite die Dispergierbarkeit beeinträchtigt werden, und es kommt nicht zu der gewünschten homogenen Färbung und der benötigten Farbstärkeentwicklung.

Granulate mit sehr guten Farbstärken und leichter Dispergierbarkeit sind andererseits oft zu weich und zerfallen bereits vor der Einarbeitung in den Baustoff, was zu vermehrter Staubbildung, zu Rückständen in den Verpackungen, zu verringerter Fließfähigkeit und entsprechend häufigen Fehldosierungen führen kann.

Von den vielfältigen Möglichkeiten der Granulation hat sich in der Praxis die Sprühgranulation durchgesetzt, während zum Beispiel die theoretisch völlig vergleichbare Wirbelbettgranulation bislang keine brauchbaren Granulate hergegeben hat.

In jüngster Zeit sind Vorschläge bekannt geworden, auf Granulate ganz zu verzichten und statt dessen beschichtete Pulver zu verwenden. Als Beispiel sei die WO 97/20892 genannt. Es bleibt abzuwarten, ob sich auf diese Weise breite Teilchengrößenverteilungen aufgrund von Verklumpungen usw. vermeiden lassen und ob sich solche beschichteten Pulver verwenden lassen, ohne die Staubprobleme zu erzeugen, wie sie für den Stand der Technik vor Einführung der Pigmentgranulate typisch waren.

Zur Förderung der Zerteilung, Suspendierung und Dispergierung der Pigmentgranulate werden Netz- und Bindemittel verwendet, die so gewählt werden, daß das Granulat mit der gewünschten Dispergierwirkung zerfällt. Alle bislang verwendeten dispergierfördernden Netz- und Bindemittelmischungen weisen jedoch den Nachteil auf, daß sie die Neigung des Ausblühens insbesondere von zementgebundenen Baustoffen verstärken. Bei dem Phänomen des Ausblühens wandern bestimmte Komponenten der Baustoffmischung, im Falle von Beton oder Zement vor allem Kalkstein (CaCO₃), allmählich, beispielsweise durch Verwitterung. Lösung oder Alterung des Materials, in gelöster Form zur Oberfläche und bilden dort nach Verdunstung des Lösungsmittels einen unerwünschten, sich ständig erneuernden Belag.

Es ist eine wesentliche Aufgabe der Erfindung, vor diesem Hintergrund ein Verfahren zur Einfärbung von Baustoffen durch Pigmentgranulate vorzuschlagen, das die Einfärbewirkung durch die Pigmente fördert und gleichzeitig die Ausblühneigung, insbesondere von zementgebundenen Baustoffen, verringert. Ferner ist es eine Aufgabe der Erfindung, ein Verfahren anzugeben, das es ermöglicht, den Pigmentgehalt in der zu granulierenden Mischung zu erhöhen.

Zur Lösung dieser Aufgabe dienen die in den unabhängigen Ansprüchen definierten Merkmale.

Vorteilhafte Ausgestaltungen sind in den Unteransprüchen beschrieben.

Die Aufgabe der Erfindung wird gelöst, indem die Pigmente, insbesondere in Form von Pigmentpulver und/oder Pigmentfilterkuchen, und die herkömmlichen Netz- und Bindemittel bei der Herstellung der Pigmentgranulate zusätzlich mit mindestens einem die Ausblühneigung verringernden Mittel und/oder einem Mittel zur Erhöhung des Pigmentgehalts in der zu granulierenden Mischung vermischt werden. Dabei wurde überraschenderweise gefunden, daß diese Mittel synergistisch wirken können, d.h. daß Mittel, die zur Erhöhung des Pigmentgehalts in der zu granulierenden Mischung beitragen, die Ausblüh-verhindernde Wirkung entsprechender (anderer) Mittel verstärken. Dabei wird durch das erfindungsgemäße Verfahren eine hervorragende Homogenität sowie eine exzellente Farbstärke der Einfärbung bewirkt.

Die Ausblühneigung verringernde Mittel werden erfindungsgemäß aus Erdalkaliionen-bindenden Verbindungen ausgewählt. Vorzugsweise werden solche Verbindungen verwendet, die mit Erdalkaliionen schwer lösliche Salze oder Komplexe, insbesondere stabile Komplexe bilden.

Komplexbildner bei dem erfindungsgemäßen Verfahren umfassen Aminopolycarbonsäuren wie EDTA, Alkan-1,1-diphosphonsäuren, Polyoxycarbonsäuren, Polyamine, Kronenether, komplexbildende Polymere und dergleichen. Die komplexbildenden Polymere können aus funktionalisierten Polystyrolen, Polyacrylaten, Polyacrylnitrilen, Polyvinylalkoholen, oder Polyethyleniminen ausgewählt werden, die als funktionelle Gruppen Iminodiessigsäure-, Hydrochinolin-, Thioharnstoff-, Guanidin-, Dithiocarbamat-, Hydroxamsäure-, Amidoxim-, Aminophosphorsäure-, cyclische oder nicht cyclische Polyamino-, Mercapto-, 1,3-Dicarbonyl- oder Kronenetherreste aufweisen.

Besonders bevorzugt sind bei dem erfindungsgemäßen Verfahren Verbindungen, die mit Erdalkaliionen schwer lösliche Salze bilden, wie Oxin (8-Chinolinol), Polycarbonsäuren, vorzugsweise Oxalsäure, oder deren entsprechenden Salze, sowie Seifen. Bei einer besonders bevorzugten Ausführungsform werden Seifen verwendet, beispielsweise herkömmliche, kommerziell erhältliche Seifen, und von diesen insbesondere weiche Seifen. Weiche Seifen können Schmier- und Kaliseifen umfassen. Vorzugsweise werden Schmierseifen und besonders bevorzugt Schmierseifen auf Pflanzenölbasis verwendet.

Zur Steigerung des Feststoffgehalts, insbesondere des Pigmentgehalts, in der zu granulierenden Mischung werden erfindungsgemäß Mittel verwendet, die die Verflüssigung von festem Pigment nach der Zugabe von Wasser sowie die Formung der Granulen, insbesondere bei der Sprühtrocknung fördern. Letzteres ist insbesondere dann von Vorteil, wenn die vorstehend genannten, die Ausblühneigung verringernden Verbindungen mit grenzflächenaktiven Eigenschaften (wie z.B. Seifen) in der zu granulierenden Mischung enthalten sind. Bei dieser bevorzugten Ausführungsform ergibt sich ein synergistischer Effekt, indem sowohl der Pigmentgehalt in der zu granulierenden Mischung und die Formbildung der Granulate überadditiv gefördert wird, als auch die Ausblühneigung von baustoffgebundenen Komponenten überadditiv reduziert wird. Die Mittel zur Erhöhung des Pigmentgehaltes in der zu granulierenden Mischung sind jedoch auch dann vorteilhaft verwendbar, wenn keine die Ausblühneigung verringernden Mittel verwendet werden, da beispielsweise bei der Sprühtrocknung durch die Erhöhung des Pigmentanteils in der zu versprühenden Pigment-Slurry (Pigment-Aufschlämmung) die Sprühkosten des Granulats erheblich gesenkt werden. Ebenso lassen sich die Mittel zur Verringerung der Ausblühneigung vorteilhaft verwenden, auch wenn auf die Formbildungs-Mittel verzichtet wird.

Das den Pigmentgehalt in der zu granulierenden Mischung erhöhende Mittel kann aus Verbindungen ausgewählt werden, die nicht lipophil sind. Vorzugsweise kann es aus Mono- oder Polyhydroxyverbindungen, Mono- oder Polyhydroxyaminoverbindungen oder Carboxylaten oder Kombinationen aus diesen Verbindungen ausgewählt werden.

Bei dem erfindungsgemäßen Verfahren für die Herstellung der Pigmentgranulate können als Monohydroxyverbindungen einwertige, primäre, sekundäre oder tertiäre, alkylsubstituierte oder nicht substituierte Alkohole verwendet werden, wie beispielsweise 1-Propanol, 2-Methyl-1-propanol, 2-Methyl-2-propanol und dergleichen. Alkohole von C₃ aufwärts werden bevorzugt. Erfindungsgemäß verwendete Polyhydroxyverbindungen umfassen mehrwertige alkylsubstituierte oder nicht substituierte Alkohole, beispielsweise Diole, Glykole wie Ethylenglykol und Polyalkylenglykole, Glycerin, Zuckeralkohole wie Sorbit und Ionosit, Trimethylolpropan und dergleichen. Vorzugsweise werden bei der vorliegenden Erfindung 2-Methyl-1-propanol und Glykole verwendet.

Ferner umfassen die bei dem erfindungsgemäßen Verfahren für die Herstellung der Pigmentgranulate verwendeten Monohydroxyaminoverbindungen einwertige, primäre, sekundäre oder tertiäre, alkylsubstituierte oder nicht alkylsubstituierte Aminoalkohole, wie beispielsweise 2-Amino-1-propanol, 2-Amino-1-butanol, 3-Amino-1-propanol, 2-Amino-2-methyl-1-propanol und dergleichen. Aminoalkohole von C₃ aufwärts werden bevorzugt. Als erfindungsgemäße Polyhydroxyaminoverbindungen können mehrwertige alkylsubstituierte oder nicht substituierte Alkohole wie beispielsweise 2-Amino-2-methyl-1,3-propandiol und dergleichen verwendet werden. Bei einer bevorzugten Ausführungsform der vorliegenden Erfindung werden Aminoalkylpropanole mit C₁- bis C₄-Alkylresten, insbesondere C₁-Alkylresten wie beispielsweise 2-Amino-2-methyl-1-propanol verwendet.

Verwendbar sind daneben andere Verbindungen mit relativ geringem Molekulargewicht (vorzugsweise C₁ bis C₁₀₀, besonders bevorzugt C₂ bis C₅₀, insbesondere C₃ bis C₂₅), die eine oder mehrere hydrophile Gruppen tragen. Dabei kann es sich um NH₂- und OH-, aber auch um Ethergruppen, Carboxylgruppen, Säurefunktionen und dergleichen handeln, gegebenenfalls auch in neutralisierter (Salz-)Form.

Die Gesamtmenge an bei dem erfindungsgemäßen Verfahren für die Herstellung der Pigmentgranulate verwendeten, die Ausblühneigung verringernden Mitteln beträgt mindestens 0,01 Gew.-%, vorzugsweise von 0,05 bis 0,5 Gew.-% und besonders bevorzugt von 0,1 bis 0,2 Gew.-%, bezogen auf die Gesamtmenge der zu granulierenden Mischung.

Die Gesamtmenge an bei dem erfindungsgemäßen Verfahren für die Herstellung von Pigmentgranulaten verwendeten Mittel zur Erhöhung des Pigmentgehalts in der zu granulierenden Mischung beträgt mindestens 0,01 Gew.-%, vorzugsweise von 0,1 bis 1 Gew.-% und besonders bevorzugt von 0,3 bis 0,7 Gew.-%, bezogen auf die Gesamtmenge der zu granulierenden Mischung.

Erfindungsgemäß kann das Pigment als Pulvermischung oder als Suspension in einem Lösungsmittel mit mindestens einem Netzmittel und/oder Bindemittel und/oder Sprengmittel, einem Mittel zur Verringerung der Ausblühneigung und/oder einem Mittel zur Erhöhung des Pigmentgehalts in der zu granulierenden Mischung vermischt werden. Als Verfahren zur Granulierung können herkömmlich bekannte Verfahren wie Verdichten, Kompaktieren, Pressen oder Brikettieren; Aufbautrocknung, Sprühtrocknung oder Wirbelschichttrocknung sowie Kombinationen aus den vorstehend genannten Verfahren verwendet werden. Vorzugsweise werden Sprühverfahren eingesetzt.

Das Netzmittel bzw. Bindemittel bzw. Sprengmittel für dieses Granulat wird so gewählt, daß das Granulat mit der gewünschten Dispergierwirkung zerfällt. Insbesondere eignen sich wasserlösliche Netz- und Bindemittel, wie insbesondere Ligninsulfonat und dergleichen; es eignen sich weiterhin Bindemittel mit Sprengwirkung bzw. echte Sprengmittel. Hierbei handelt es sich meist um stark hydrophile Polymere mit einem entsprechend großen Absorptionsvermögen für Wasser, beispielsweise bestimmte Zellulosederivate, Dextrane, quervernetztes Polyvinylpyrrolidon und dergleichen. Statt dessen oder zusätzlich können Hydrophilierungsmittel eingesetzt werden, wie beispielsweise PEG-Fettsäureester und dergleichen. Auch bestimmte anorganische Bestandteile wie unter der Einwirkung von Wasser gasbildend reaktive Systeme können verwendet werden.

Trockenbindemittel wie Lactose, Zucker und dergleichen werden generell weniger bevorzugt, können aber für spezielle Anwendungen mit Vorteil verwendet werden.

Eine wichtige Wahlkomponente für erfindungsgemäße Granulate ist Wasserglas, insbesondere Kaliwasserglas, das der wässrigen Ausgangsmischung für die Granulierung zugesetzt wird und als Binde- und Verdichtungsmittel wirkt. Vorzugsweise werden Zusätze im Bereich unterhalb 1 Gew.-% (bezogen auf die gesamte Mischung) verwendet.

Die Wahl des Netzmittels, Bindemittels und/oder Sprengmittels erfolgt so, daß das Granulat beim Einsatz zur Färbung, also in üblicherweise wässrigen Baustoffgemischen, ausreichend schnell und ausreichend vollständig suspendiert und/oder dispergiert wird. Hier spielen auch die Art des Pigments, das Verfahren der Granulierung und die Nachbehandlung eine Rolle, so daß man das jeweils geeignete Gemisch durch entsprechende einfache Versuche festlegen wird.

Bei allen vorgenannten Ausführungsformen der Erfindung können erfindungsgemäß die Handhabung, die Einarbeitung in den Baustoff, die Dispergiereigenschaften, die Farbdichte und dergleichen vorteilhaft weiter dadurch beeinflußt werden, daß das Granulat, vor der Vermischung mit den Baustoffen, oberflächig behandelt wird. Insbesondere kann das Granulat mit einem Trennmittel und/oder einem Netzmittel beschichtet werden. Man wird diese Mittel so wählen, daß sie nicht zu Verklumpungen und Verbackungen des Granulats in der Verpackung führen, also nicht etwa allzu sehr hygroskopisch sind. Andererseits ist eine benetzungsfördernde Wirkung erwünscht.

Die Verwendung der Granulate beim Vermischen mit den Baustoffen entspricht den bekannten und üblichen Vorgehensweisen.

Das nachfolgende Beispiel dient der Erläuterung der Erfindung.

### Beispiel

Ein Granulat, welches sich für das erfindungsgemäße Verfahren zur Einfärbung von Baustoffen eignet, wurde nach der folgenden Rezeptur hergestellt:

| Stoff | Gew.-% |
|---|---|
| Frischwasser | 32,90 |
| Polyacrylat (40 %ig) | 1,30 |
| Kaliwasserglas | 0,15 |
| Eisenoxidrot | 65,00 |
| 2-Amino-2-methyl- 1-propanol | 0,50 |
| Schmierseife | 0,15 |
| Natronlauge (20%ig) | |

Baustoffe, die mit auf diese Weise hergestellten Pigmentgranulaten eingefärbt wurden, wiesen eine ausgezeichnete Dispersion der Pigmentgranulate in der Baustoffmischung und damit eine hervorragende Homogenität sowie eine sehr gute Farbstärke der Einfärbung auf. Gleichzeitig waren sie durch eine äußerst geringe Neigung des Ausblühens von Komponenten der Baustoffmischung gekennzeichnet.

## Patentansprüche

1. Verwendung einer Kombination aus Erdalkali-Ionen bindenden Verbindungen und einem oder mehreren aus der Gruppe der Mono- oder Polyhydroxyverbindungen, Monooder Polyhydroxyaminoverbindungen, Carboxylate und Wasserglas ausgewählten Mittel, bei der Herstellung von Pigmentgranulaten zur Einfärbung von Baustoffen, zur Verringerung der Ausblühneigung baustoffgebundener Komponenten und/oder zur Erhöhung des Pigmentgehaltes in der zu granulierenden Mischung.

2. Verwendung nach Anspruch 1, wobei die Erdalkali-Ionen bindenden Verbindungen aus Seifen, insbesondere Schmierseifen, oder Komplexbildnern, insbesondere Oxalsäure oder Oxalate ausgewählt sind.

3. Pigmentgranulat zur Einfärbung von Baustoffen, hergestellt aus einer Mischung, die Pigment, mindestens ein Netzmittel und/oder Bindemittel und/oder Sprengmittel, sowie ein Mittel zur Erhöhung des Pigmentgehalts in der zu granulierenden Mischung, und mindestens eine Seife umfaßt.

4. Granulat nach Anspruch 3, wobei die Seifen Schmierseifen sind.

5. Granulat nach einem der Ansprüche 3 oder 4, wobei die Gesamtmenge an Seifen im Bereich von 0,05 bis 0,5 Gew.-%, bezogen auf die Gesamtmenge der zu granulierenden Mischung, liegt.

6. Granulat nach einem der Ansprüche 3 oder 4, wobei die Gesamtmenge an Seifen im Bereich von 0,1 bis 0,2 Gew.-%, bezogen auf die Gesamtmenge der zu granulierenden Mischung liegt.

7. Granulat nach einem der Ansprüche 3 bis 6, wobei die Mischung zur Herstellung des Granulats zusätzlich Wasserglas, insbesondere Kaliwasserglas enthält.

8. Granulat nach Anspruch 7, wobei die Menge an Wasserglas bzw. Kaliwasserglas weniger als 1 Gew.-%, bezogen auf die Gesamtmenge der zu granulierenden Mischung, beträgt.

9. Granulat nach einem der Ansprüche 3 bis 8, wobei die den Pigmentgehalt in der zu granulierenden Mischung erhöhenden Mittel aus der Gruppe bestehend aus Mono- oder Polyhydroxyverbindungen, Mono- oder Polyhydroxyaminoverbindungen, Carboxylaten und Kombinationen aus diesen Verbindungen, ausgewählt sind.

10. Verwendung nach Anspruch 1 oder 2 bzw. Granulat nach Anspruch 9, wobei die Hydroxyaminoverbindungen Aminoalkylpropanole mit C₁- bis C₄-Alkylresten, insbesondere Aminomethylpropanole umfassen.

11. Verwendung nach Anspruch 1 oder 2 bzw. Granulat nach Anspruch 9, wobei die Hydroxyverbindungen Methylpropanole und Glykole umfassen.

12. Granulat nach einem der Ansprüche 3 - 11, wobei die Gesamtmenge an den Pigmentgehalt in der zu granulierenden Mischung erhöhenden Mitteln im Bereich von 0,1 bis 1 Gew.-%, bezogen auf die Gesamtmenge der zu granulierenden Mischung, liegt.

13. Granulat nach einem der Ansprüche 3 - 11, wobei die Gesamtmenge an den Pigmentgehalt in der zu granulierenden Mischung erhöhenden Mitteln im Bereich von 0,3 bis 0,7 Gew.-%, bezogen auf die Gesamtmenge der zu granulierenden Mischung, liegt.

14. Granulat nach einem der Ansprüche 3 bis 13, wobei das Pigment Pigmentpulver und Pigmentfilterkuchen umfaßt.

15. Verfahren zur Herstellung eines Granulats nach einem der Ansprüche 3 bis 14, wobei Pigment als Pulvermischung oder als Suspension in einem Lösungsmittel mit mindestens einem Netzmittel und/oder Bindemittel und/oder Sprengmittel, einem Mittel zur Erhöhung des Pigmentgehalts in der zu granulierenden Mischung und einer Seife vermischt wird.

16. Verfahren nach Anspruch 15, wobei das Granulat durch Verdichten, Kompaktieren, Pressen oder Brikettieren, durch Aufbau-, Sprüh- oder Wirbelschichttrocknung oder durch Kombinationen aus diesen Verfahren erzeugt wird.

17. Verfahren nach Anspruch 15 oder 16, wobei das Granulat vor der Vermischung mit den Baustoffen mit einem Trennmittel und/oder einem Netzmittel beschichtet wird.

## Claims

1. Use of a combination of alkaline earth ion binding compounds and one or more agents selected from the group comprising mono- or polyhydroxy compounds, mono- or polyhydroxy amino compounds, carboxylates and water glass, for the manufacture of pigment granulates for the coloring of building materials, for reducing the tendency of components bound by the building materials to effloresce and/or to increase the pigment content in the mixture to be granulated.

2. Use according to claim 1, wherein the alkaline earth binding compounds are selected from soaps, in particular soft soaps, or chelating agents, particularly oxalic acids or oxalate.

3. Pigment granulate for the coloring of building materials, manufactured from a mixture containing pigment, at least one wetting agent and/or binder and/or disintegrant, and an agent to increase the pigment content in the mixture to be granulated, and at least one soap.

4. The granulate according to claim 3, wherein the soap is a soft soap.

5. The granulate according to any one of claims 3 or 4, wherein the total amount of soaps is in the range of 0.05 to 0.5% by weight, based on the total amount of the mixture to be granulated.

6. The granulate according to any one of claims 3 or 4, wherein the total amount of soaps is in the range of 0.1 to 0.2% by weight, based on the total amount of the mixture to be granulated.

7. The granulate according to any one of claims 3 to 6, wherein the mixture from which the granulate is manufactured additionally comprises water glass, particularly potassium water glass.

8. The granulate according to claim 7, wherein the amount of water glass or potassium water glass, respectively, is less than 1% by weight, based on the total amount of the mixture to be granulated.

9. The granulate according to any one of claims 3 to 8, wherein the agents for increasing the pigment content in the mixture to be granulated are selected from the group consisting of mono- or polyhydroxy compounds, mono- or polyhydroxy amino compounds, carboxylates and combinations of these compounds.

10. The use according to claim 1 or 2, or the granulate according to claim 9, wherein the hydroxy amino compounds comprise amino alkyl propanols having C₁-C₄ alkyl residues, particularly amino methyl propanols.

11. The use according to claim 1 or 2, or the granulate according to claim 9, wherein the hydroxy compounds comprise methyl propanols or glycols.

12. The granulate according to any one of claims 3-11, wherein the total amount of the agents for increasing the pigment content in the mixture to be granulated is in the range of 0.1 to 1% by weight, based on the total amount of the mixture to be granulated.

13. The granulate according to any one of claims 3-11, wherein the total amount of agents for increasing the pigment content in the mixture to be granulated is in the range of 0.3 to 0.7% by weight, based on the total amount of the mixture to be granulated.

14. The granulate according to any one of claims 3 to 13, wherein the pigment comprises pigment powder and pigment filter cake.

15. A process for manufacturing a granulate according to any one of claims 3 to 14, comprising mixing the pigment as a powder mixture or as a suspension in a solvent with at least one wetting agent and/or binder and/or disintegrant, an agent to increase the pigment content in the mixture to be granulated, and a soap.

16. The process according to claim 15, wherein the granulate is produced by compressing, compacting, pressing, briquetting, pelletizing, spray-drying or fluidized bed drying, or by a combination of these processes.

17. The process according to claim 15 or 16, wherein the granulate is coated with a separation agent and/or wetting agent prior to being mixed with the building materials.

## Revendications

1. Utilisation d'une combinaison de composés liant les ions alcalino-terreux et d'un ou plusieurs agents, choisis dans le groupe des composés mono- ou polyhydroxylés, des composés mono- ou polyhydroxylaminés, des carboxylates et du verre soluble, dans la fabrication de granulats pigmentaires pour colorer des matériaux de construction, pour diminuer la tendance à l'efflorescence de composants liés au matériau de construction, et/ou pour augmenter la teneur en pigment du mélange à granuler.

2. Utilisation selon la revendication 1, dans laquelle les composés liant les ions alcalino-terreux sont choisis parmi les savons, en particulier les savons noirs, ou parmi les agents complexants, en particulier l'acide oxalique ou les oxalates.

3. Granulat pigmentaire pour la coloration de matériaux de construction, fabriqué à partir d'un mélange comprenant des pigments, au moins un agent mouillant et/ou un liant et/ou un agent désintégrant, ainsi qu'un agent destiné à augmenter la teneur en pigment du mélange à granuler, et au moins un savon.

4. Granulat selon la revendication 3, dans lequel les savons sont des savons noirs.

5. Granulat selon l'une des revendications 3 et 4, dans lequel la quantité totale de savon est comprise entre 0,05 % et 0,5 % en poids de la quantité totale du mélange à granuler.

6. Granulat selon l'une des revendications 3 et 4, dans lequel la quantité totale de savon est comprise entre 0,1 % et 0,2 % en poids de la quantité totale du mélange à granuler.

7. Granulat selon l'une des revendications 3 à 6, dans lequel le mélange destiné à la fabrication du granulat contient en outre du verre soluble, en particulier du silicate de potassium.

8. Granulat selon la revendication 7, dans lequel la quantité de verre soluble ou de silicate de potassium est inférieure à 1 % en poids de la quantité totale du mélange à granuler.

9. Granulat selon l'une des revendications 3 à 8, dans lequel les agents augmentant la teneur en pigment du mélange à granuler sont choisis dans le groupe constitué par les composés mono- ou polyhydroxylés, les composés mono- ou polyhydroxylaminés, les carboxylates et les combinaisons de ces composés.

10. Utilisation selon la revendication 1 ou 2 ou granulat selon la revendication 9, dans laquelle/lequel les composés hydroxylaminés comprennent des aminoalkylpropanols comportant des radicaux alkyles C₁ à C₄, en particulier les aminométhylpropanols.

11. Utilisation selon la revendication 1 ou 2, ou granulat selon la revendication 9, dans laquelle/lequel les composés hydroxylés comprennent les méthylpropanols et les glycols.

12. Granulat selon l'une des revendications 3 à 11, dans lequel la quantité totale d'agents augmentant la teneur en pigment du mélange à granuler est comprise entre 0,1 et 1 % en poids de la quantité totale du mélange à granuler.

13. Granulat selon l'une des revendications 3 à 11, dans lequel la quantité totale d'agents augmentant la teneur en pigment du mélange à granuler est comprise entre 0,3 et 0,7 % en poids de la quantité totale du mélange à granuler.

14. Granulat selon l'une des revendications 3 à 13, dans lequel le pigment comprend des pigments sous forme de poudre et des pigments sous forme de gâteau de filtration.

15. Procédé de fabrication d'un granulat selon l'une des revendications 3 à 14, dans lequel le pigment, sous forme de mélange pulvérulent ou sous forme de suspension dans un solvant, est mélangé avec au moins un agent mouillant et/ou un liant et/ou un agent désintégrant, un agent augmentant la teneur en pigment du mélange à granuler et un savon.

16. Procédé selon la revendication 15, dans lequel le granulat est obtenu par compression, compactage, pressage ou agglomération, par accumulation-séchage, séchage par atomisation ou séchage en lit fluidisé ou par une combinaison de ces procédés.

17. Procédé selon l'une des revendications 15 et 16, dans lequel le granulat est enrobé, avant le mélange avec les matériaux de construction, d'un agent séparateur et/ou d'un agent mouillant.
